# EUROPEAN PATENT APPLICATION

(11) **EP 4 221 066 A1**
(43) Date of publication of application: **02.08.2023**
(21) Application number: 22154304.4
(22) Date of filing: 31.01.2022
(51) Int. Cl.: H04L 9/00

(54) **SYSTEM AND METHOD FOR EXCHANGING PRIVATE DATA AMONG NODES IN BLOCKCHAIN NETWORK**

(71) Applicant: Siemens Aktiengesellschaft, 80333 München (DE)
(72) Inventor: RAJ, Arun, 635110 Hosur, Tamil Nadu (IN); SINGH, Saurabh Narayan, 81739 München (DE)
(74) Representative: Horn Kleimann Waitzhofer Patentanwälte PartG mbB

(57) **Abstract**

A system (100) and a method (200) for exchanging private data among nodes (102a, 102b, ..., 102n) in a blockchain network (102). The method (200) comprises defining one or more groups of nodes; implementing a structured network topology with one or more network zones for establishing connections between the nodes; assigning a topology identification number to each of the nodes, such that the topology identification numbers of the nodes in each of the network zones are in a series; defining a limit for each of the network zones based on the topology identification numbers of the nodes therein; and exchanging private data between the nodes in the blockchain network in consideration of the defined limits for the corresponding network zones thereof.

## Description

The present disclosure generally relates to blockchain networks, and more particularly to a method and a system for exchanging private data among nodes by implementing structured network topologies to enforce stricter confidentiality requirements in the blockchain networks.

Blockchain is a chronological database as it records data in form of chained or ordered blocks and each block corresponds to the data or transactions in a specific logical or real time epoch. Compared to its inception and use cases in the public domain, blockchain now is being used for a variety of applications in the industrial domain like supply chain, IoT, etc. For majority of these use cases, confidentiality is a major requirement and open blockchains like Ethereum are inherently incompatible as they expose all the data to every participating stakeholder. Alternatively, we have specific blockchains which cater to permissioned settings, like Hyperledger Fabric, which provide different types of confidentiality features like private channels and private data sets, which allow a subset of participants to share sensitive data with certain level of confidentiality promises amongst them without exposing it to others.

However, such features are often provided on top of the existing networking infrastructure in the form of SDN subnets, etc. Essentially, software abstractions are created on top of an existing networking infrastructure which can be configured according to the requirements; for example, a small representative peer to peer blockchain network consisting of required nodes. That is, in most blockchain frameworks, confidentiality proposals are supported only by creating software abstractions on top of the framework. These abstractions can be created separately, like side chains, or be part of the protocol, in the form of private channels, private data sets, etc. These can be broadly classified into two categories. One being techniques which create sub-blockchain networks within the main network. Separate blockchains for each confidentiality group are created and the data is stored in a way that nodes outside cannot view the data. The private channels of Hyperledger Fabric, and side chains in general (such as, in Ethereum network and the like) are some examples of this technique. Other being techniques which store encrypted data on the main network. The data is stored on the main blockchain in encrypted form and the decryption keys are shared only among responsible stakeholders. Open Ethereum's Secret Store works in this manner.

However, in both the cases, the properties of privacy and confidentiality are achieved at the software layer (application or protocol). The private data is still transmitted by gossip protocol across the network and passes via unauthorized nodes. For example, if a set of nodes, from all the nodes, wish to share confidential data, a private channel is created between them. However, prior to the creation of the private channel, the network links would have already been established and most of the messages to be transmitted to a particular node in the said set of nodes may need to pass through one or more other nodes which are not a part of the created private channel. Though only authorized nodes (i.e., nodes in the defined set of nodes) can decrypt and view the information, sensitive information is still passed through unauthorized nodes in the network who can potentially save it and decrypt at leisure.

In other words, in the previous example, generally, all data in the private channel is visible to nodes other than the ones in the defined set of nodes, even though it is encrypted and thereby not immediately readable by such unauthorized nodes. There are two major concerns with such existing approaches. One is confidentiality, as the data is transmitted via unauthorized parties, there is risk of sensitive data being compromised. Other being performance, as the data is transmitted to redundant parties, the available network bandwidth decreases which can result in potential packet drops and timeouts.

In light of the above, it is an object of the present disclosure to provide a blockchain network framework that can provide higher level of confidentiality guarantees than the existing frameworks, by restricting the movement of confidential data at the network layer itself.

The object of the present disclosure is achieved by a method for exchanging private data among nodes in a blockchain network. The method comprises defining one or more groups of nodes required to exchange the private data therebetween. The method further comprises implementing a structured network topology with one or more network zones for establishing connections between the nodes in the blockchain network, such that the nodes in each of the one or more groups of nodes are arranged in one of the one or more network zones in the implemented structured network topology. The method further comprises assigning a topology identification number to each of the nodes, such that the topology identification numbers of the nodes in each of the network zones are in a series. The method further comprises defining a limit for each of the network zones based, at least in part, on the topology identification numbers of the nodes therein for exchange of the private data by one of the nodes in the corresponding network zone to one or more other nodes in the said corresponding network zone. The method further comprises exchanging private data between the nodes in the blockchain network in consideration of the defined limits for the corresponding network zones thereof.

The proposed use of structured network topology helps to enforce stricter confidentiality requirements in the blockchain network. Such blockchain network can provide higher level of confidentiality guarantees than the existing techniques, by restricting the movement of confidential data at the network layer itself. Herein, confidential data is specifically transmitted only to the target nodes without being forwarded by other nodes.

In one or more embodiments, the topology identification numbers for the nodes in each of the network zones comprise a lowest topology identification number and a highest topology identification number, and wherein the limit for each of the network zones is defined based on the lowest topology identification number and the highest topology identification number of the nodes therein.

In one or more embodiments, in case of a given node in the blockchain network is required to exchange private data with nodes in two groups of the defined one or more groups of nodes, the method comprises assigning the topology identification number to the given node succeeding the highest topology identification number for the nodes in first of the said two groups of nodes and preceding the lowest topology identification number for the nodes in second of the said two groups of nodes, and the highest topology identification number for the nodes in first of the said two groups of nodes, the assigned topology identification number to the given node and the lowest topology identification number for the nodes in second of the said two groups of nodes are in a series. Further, the limit for the network zone corresponding to the first of the said two groups of nodes is defined based on the lowest topology identification number of the nodes therein and the assigned topology identification number to the given node, and the limit for the network zone corresponding to the second of the said two groups of nodes is defined based on the assigned topology identification number to the given node and the highest topology identification number of the nodes therein.

In one or more embodiments, in case of a given node in the blockchain network is required to exchange private data with nodes in two groups of the defined one or more groups of nodes, the method comprises assigning a first topology identification number to the given node succeeding the highest topology identification number for the nodes in first of the said two groups of nodes, assigning a second topology identification number to the same given node preceding the lowest topology identification number for the nodes in second of the said two groups of nodes. Further, the limit for the network zone corresponding to the first of the said two groups of nodes is defined based on the lowest topology identification number of the nodes therein and the assigned first topology identification number to the given node, and the limit for the network zone corresponding to the second of the said two groups of nodes is defined based on the assigned second topology identification number to the given node and the highest topology identification number of the nodes therein.

In one or more embodiments, the structured network topology is one of: a ring topology, a tree topology, an XOR topology, a cube topology, a hypercube topology.

The object of the present disclosure is also achieved by a system for exchanging private data among nodes in a blockchain network. The system comprises one or more processing units, and a memory communicatively coupled to the one or more processing units, the memory comprising a module stored in the form of machine-readable instructions executable by the one or more processing units, wherein the module is configured to perform the method steps described above.

The object of the present disclosure is further achieved by a computer-program product, having computer-readable instructions stored therein, that when executed by a processing unit, cause the processing unit to perform the method steps described above.

The object of the present disclosure is further achieved by a computer readable medium on which program code sections of a computer program are saved, the program code sections being loadable into and/or executable in a system to make the system execute the method steps described above when the program code sections are executed in the system.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the scope of the invention. Accordingly, the drawings and description are to be regarded as illustrative in nature, and not as restrictive.

As used herein, the term "blockchain" or "blockchain network" may refer to a decentralized network that includes the plurality of nodes. In an example, the blockchain network is a consortium blockchain network. Such plurality of nodes may, for example, perform transactions in the blockchain network.

As used herein, the term "computing device" may refer to be a physical, a virtual device or a computer-program product. In many implementations, the computing device may be any device capable of performing operations, such as a dedicated processor, a portion of a processor, a virtual processor, a portion of a virtual processor, portion of a virtual device, or a virtual device. The system of the present disclosure may include or be embodied in the computing device. In some implementations, the computing device may execute an application for exchanging private data among nodes in the blockchain network.

As used herein, the term "network" may refer to a communication framework utilized for communication of the blockchain network, the computing device and the ledger. Further, the term "network topology" may refer to physical and/or logical arrangement of network nodes in the network.

The above-mentioned attributes, features, and advantages of this invention and the manner of achieving them, will become more apparent and understandable (clear) with the following description of embodiments of the invention in conjunction with the corresponding drawings. The illustrated embodiments are intended to illustrate, but not limit the invention:
FIG 1 is a schematic diagram representation of a system implementing a blockchain network, in accordance with one or more embodiments of the present disclosure;
FIG 2 is a flowchart representation of a method listing steps involved in exchanging private data among nodes in the blockchain network, in accordance with one or more embodiments of the present disclosure;
FIG 3 is an exemplary implementation of a first structured network topology for the blockchain network, in accordance with one embodiment of the present disclosure;
FIG 4 is an exemplary implementation of a second structured network topology for the blockchain network, in accordance with another embodiment of the present disclosure;
FIG 5 is depiction of a scenario for the blockchain network in which a given node is required to exchange private data with nodes in two groups of nodes, in accordance with one or more embodiments of the present disclosure;
FIG 6 is an exemplary implementation of a structured network topology for the blockchain network for execution of the scenario of FIG 5, in accordance with one embodiment of the present disclosure; and
FIG 7 is an exemplary implementation of a structured network topology for the blockchain network for execution of the scenario of FIG 5, in accordance with another embodiment of the present disclosure.

Examples of a method, a system, a computer-program product and a computer readable medium for exchanging private data among nodes in a blockchain network are disclosed herein. Various embodiments are described with reference to the drawings, wherein like reference numerals are used to refer to like elements throughout. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

Unless specified otherwise in the following description, the terms "perform", "calculate", "computer-assisted", "compute", "establish", "generate", "configure", "reconstruct", and the like preferably relate to operations and/or processes and/or processing steps that change and/or generate data and/or convert the data into other data, wherein the data may be represented or be present in particular in the form of physical variables, for example in the form of electrical impulses. The expression "computer" should in particular be interpreted as broadly as possible in order in particular to cover all electronic devices having data processing properties. Computers may thus for example be personal computers, servers, programmable logic controllers (PLCs), hand-held computer systems, pocket PC devices, mobile radio devices and other communication devices able to process data in a computer-assisted manner, processors and other electronic data processing devices.

Moreover, in particular a (relevant) person skilled in the art, with knowledge of the method claim/method claims, is of course aware of all routine possibilities for realizing products or possibilities for implementation in the prior art, and so there is no need in particular for independent disclosure in the description. In particular, these customary realization variants known to the person skilled in the art can be realized exclusively by hardware (components) or exclusively by software (components). Alternatively and/or additionally, the person skilled in the art, within the scope of his/her expert ability, can choose to the greatest possible extent arbitrary combinations according to embodiments of the invention for hardware (components) and software (components) in order to implement realization variants according to embodiments of the invention.

A combination according to embodiments of the invention for hardware (components) and software (components) can occur in particular if one portion of the effects according to embodiments of the invention is brought about exclusively by special hardware (e.g., a processor in the form of an ASIC or FPGA) and/or another portion by the (processor- and/or memory-aided) software.

In particular, in view of the high number of different realization possibilities, it is impossible and also not helpful or necessary for the understanding of embodiments of the invention to name all these realization possibilities. In this respect, in particular all the exemplary embodiments below are intended to demonstrate merely by way of example a few ways in which in particular such realizations of the teaching according to embodiments of the invention could be manifested.

Consequently, in particular the features of the individual exemplary embodiments are not restricted to the respective exemplary embodiment, but rather relate in particular to embodiments of the invention in general. Accordingly, features of one exemplary embodiment can also serve as features for another exemplary embodiment, in particular without this having to be explicitly stated in the respective exemplary embodiment.

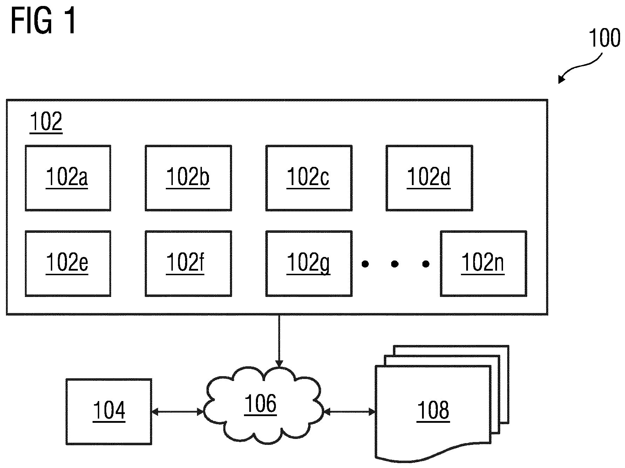

FIG 1 shows an exemplary embodiment of the present disclosure as a schematic diagram of a system 100 implemented for exchanging private data among nodes 102a, 102b, ..., 102n in a blockchain network 102. In present implementation, the system 100 may reside on or may be executed by one or multiple computing devices 104, which may be connected to a network (e.g., the internet or a local area network), such as a network 106. The system 100 further includes a ledger 108 (such as a database). The blockchain network 102, the computing devices 104 and the ledger 108 are communicatively coupled via the network 106. Examples of computing devices 104 may include, but are not limited to, a personal computer(s), a laptop computer(s), mobile computing device(s), a server computer, a series of server computers, a mainframe computer(s), or a computing cloud(s). In general, the "computing device" in connection with embodiments of the present may be understood to mean for example a computer (system), a client, a smartphone, a device or a server that are in each case arranged outside the blockchain or are not participants in the distributed database (for example the blockchain) (that is to say do not perform operations with the distributed database or only query it without however performing transactions, inserting data blocks or calculating proof of work). As an alternative, the computing device may also in particular be understood to mean a node of the distributed database (as explained later in the description).

As illustrated in FIG 1, the system 100 includes the blockchain network 102. The blockchain network 102 includes a plurality of nodes, such as the nodes 102a, 102b, ..., 102n. The blockchain network 102 is a decentralized network that includes the plurality of nodes. In an example, the blockchain network 102 is a consortium blockchain network 102. Within the context of embodiments of the present disclosure, a "blockchain node", "node", "node of a blockchain" and the like can be understood to mean for example devices (e.g., field devices), computers, clients or subscribers that perform operations with a blockchain, such as the blockchain network 102.

In certain implementations, the computing device 104 may be a physical or virtual device. In many implementations, the computing device 104 may be any device capable of performing operations, such as a dedicated processor, a portion of a processor, a virtual processor, a portion of a virtual processor, portion of a virtual device, or a virtual device. In some implementations, a processor may be a physical processor or a virtual processor. In some implementations, a virtual processor may correspond to one or more parts of one or more physical processors. In some implementations, the instructions/logic may be distributed and executed across one or more processors, virtual or physical, to execute the instructions/logic.

In an example, the computing device 104 may be a computer-program product programmed for performing the said purpose. In another example, the computing device 104 may be a computer readable medium on which program code sections of a computer program are saved, the program code sections being loadable into and/or executable in a system to make the system execute the steps for performing the said purpose. The computing device 104 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device 104 can be implemented in a single chip. The system of the present disclosure as discussed in the preceding paragraphs may include or be embodied in the computing device 104. It may be appreciated that the two systems and (and the corresponding components/elements) may be equivalent for the purposes of the present disclosure.

In one embodiment, the computing device 104 includes a communication mechanism such as a bus for passing information among the components of the computing device 104. The computing device 104 includes one or more processing units and a memory unit. Generally, the memory unit is communicatively coupled to the one or more processing units. Hereinafter, the one or more processing units are simply referred to as processor and the memory unit is simply referred to as memory. Herein, in particular, the processor has connectivity to the bus to execute instructions and process information stored in the memory. The processor may include one or more processing cores with each core configured to perform independently. A multi-core processor enables multiprocessing within a single physical package. Examples of a multi-core processor include two, four, eight, or greater numbers of processing cores. Alternatively, or in addition, the processor may include one or more microprocessors configured in tandem via the bus to enable independent execution of instructions, pipelining, and multithreading. The processor may also be accompanied with one or more specialized components to perform certain processing functions and tasks such as one or more digital signal processors (DSP), or one or more application-specific integrated circuits (ASIC). A DSP typically is configured to process real-world signals (e.g., sound) in real time independently of the processor. Similarly, an ASIC can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

As used herein, the term "processor" refers to a computational element that is operable to respond to and processes instructions that drive the system. Optionally, the processor includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processor" may refer to one or more individual processors, processing devices and various elements associated with a processing device that may be shared by other processing devices. Additionally, the one or more individual processors, processing devices and elements are arranged in various architectures for responding to and processing the instructions that drive the system.

The processor and accompanying components have connectivity to the memory via the bus. The memory includes both dynamic memory (e.g., RAM, magnetic disk, writable optical disk, etc.) and static memory (e.g., ROM, CD-ROM, etc.) for storing executable instructions that when executed perform the method steps described herein for exchanging private data among nodes in a blockchain network. In particular, the memory includes a module arrangement to perform steps for exchanging private data among nodes in a blockchain network. The memory also stores the data associated with or generated by the execution of the inventive steps.

Herein, the memory may be volatile memory and/or non-volatile memory. The memory may be coupled for communication with the processing unit. The processing unit may execute instructions and/or code stored in the memory. A variety of computer-readable storage media may be stored in and accessed from the memory. The memory may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In some implementations, the instruction sets and subroutines of the system 100, which may be stored on storage device, such as storage device coupled to computer, may be executed by one or more processors and one or more memory architectures included within computer. In some implementations, one or more of storage devices may include but are not limited to: hard disk drives; flash drives, tape drives; optical drives; RAID arrays; random access memories (RAM); and read-only memories (ROM). Examples of user devices (and/or computer) may include, but are not limited to, a personal computer, a laptop computer, a smart/data-enabled, cellular phone, a notebook computer, a tablet, a server, a television, a smart television, a media capturing device, and a dedicated network device.

In some implementations, the computing device 104 may include a data store, such as a database (e.g., relational database, object-oriented database, triplestore database, etc.) and may be located within any suitable memory location, such as storage device coupled to computer. In some implementations, data, metadata, information, etc. described throughout the present disclosure may be stored in the data store. In some implementations, computer may utilize any known database management system such as, but not limited to, DB2, in order to provide multi-user access to one or more databases, such as the above noted relational database. In some implementations, the data store may also be a custom database, such as, for example, a flat file database or an XML database. In some implementations, any other form(s) of a data storage structure and/or organization may also be used. In some implementations, the system 100 may be a component of the data store, a standalone application that interfaces with the above noted data store and/or an applet / application that is accessed via client applications. In some implementations, the above noted data store may be, in whole or in part, distributed in a cloud computing topology. In this way, computer and storage device may refer to multiple devices, which may also be distributed throughout the network 106.

In some implementations, the computing device 104 may execute an application for exchanging private data among nodes in a blockchain network, as described later in detail in the description. In some implementations, the system 100 and/or application may be accessed via one or more of client applications. In some implementations, the system 100 may be a standalone application, or may be an applet / application / script / extension that may interact with and/or be executed within application a component of application and/or one or more of client applications. In some implementations, application may be a standalone application, or may be an applet / application / script / extension that may interact with and/or be executed within the system 100, a component of the system 100, and/or one or more of client applications. In some implementations, one or more of client applications may be a standalone application, or may be an applet / application / script / extension that may interact with and/or be executed within and/or be a component of the system 100 and/or application. Examples of client applications may include, but are not limited to, a standard and/or mobile web browser, an email application (e.g., an email client application), a textual and/or a graphical user interface, a customized web browser, a plugin, an Application Programming Interface (API), or a custom application. The instruction sets and subroutines of client applications which may be stored on storage devices coupled to user devices may be executed by one or more processors and one or more memory architectures incorporated into user devices.

In some implementations, one or more of client applications may be configured to effectuate some or all of the functionality of the system 100 (and vice versa). Accordingly, in some implementations, the system 100 may be a purely server-side application, a purely client-side application, or a hybrid server-side / client-side application that is cooperatively executed by one or more of client applications and/or the system 100.

In some implementations, one or more of client applications may be configured to effectuate some or all of the functionality of application (and vice versa). Accordingly, in some implementations, application may be a purely server-side application, a purely client-side application, or a hybrid server-side / client-side application that is cooperatively executed by one or more of client applications and/or application. As one or more of client applications the system 100, and application taken singly or in any combination, may effectuate some or all of the same functionality, any description of effectuating such functionality via one or more of client applications the system 100, application or combination thereof, and any described interaction(s) between one or more of client applications the system 100, application or combination thereof to effectuate such functionality, should be taken as an example only and not to limit the scope of the disclosure.

In some implementations, one or more of users may access the system 100 (e.g., using one or more of user devices) directly through the network 106. In some implementations, the network 106 may be connected to one or more secondary networks, examples of which may include but are not limited to: a local area network; a wide area network; or an intranet, for example. In some implementations, the computing device 104 may be connected to the network 106 through secondary network with phantom link line.

In some implementations, the various user devices may be directly or indirectly coupled to the network 106. For example, user device may be directly coupled to the network 106 via a hardwired network connection. Alternatively, user device may be wirelessly coupled to the network 106 via wireless communication channel established between user device and wireless access point (i.e., WAP) which in turn may be directly coupled to the network 106. WAP may be, for example, an IEEE 802.11a, 802.11b, 802.11g, 802.11ac, 802.11ae, Wi-Fi^{®}, RFID, and/or Bluetooth^{™} (including Bluetooth^{™} Low Energy) device that is capable of establishing wireless communication channel between user device and WAP. In other examples, user device may be wirelessly coupled to the network 106 via wireless communication channel established between user device and cellular network / bridge which may be directly coupled to the network 106. User devices may execute an operating system, examples of which may include but are not limited to, Android^{®}, Apple^{®} iOS^{®}, Mac^{®} OS X^{®}; Red Hat^{®} Linux^{®}, or a custom operating system.

In some implementations, some or all of the IEEE 802.11x specifications may use Ethernet protocol and carrier sense multiple access with collision avoidance (i.e., CSMA/CA) for path sharing. The various 802.11x specifications may use phase-shift keying (i.e., PSK) modulation or complementary code keying (i.e., CCK) modulation, for example, Bluetooth^{™} (including Bluetooth^{™} Low Energy) is a telecommunications industry specification that allows, e.g., mobile phones, computers, smart phones, and other electronic devices to be interconnected using a short-range wireless connection. Other forms of interconnection (e.g., Near Field Communication (NFC)) may also be used.

It is to be understood that the system and computer-assisted method described herein may be implemented in various forms of hardware, software, firmware, special purpose processors, or a combination thereof. "Computer-assisted" in connection with embodiments of the present disclosure may be understood to mean for example an implementation of the method in which in particular a processor executes at least one method step of the method. One or more of the present embodiments may take a form of a computer program product comprising program modules accessible from computer-usable or computer-readable medium storing program code for use by or in connection with one or more computers, processors, or instruction execution system. A "module" in connection with embodiments of the invention may be understood to mean for example a processor and/or a storage unit for storing program commands. By way of example, the processor is specifically configured so as to execute the program commands such that the processor executes functions in order to implement or perform the method according to embodiments of the invention or a step of the method according to embodiments of the invention. For the purpose of this description, a computer-usable or computer-readable medium can be any apparatus that can contain, store, communicate, propagate, or transport the program for use by or in connection with the instruction execution system, apparatus, or device.

As described herein, the module in the memory of the computing device 104 is configured to perform the operations of a method for exchanging private data among nodes in the blockchain network 102. The computing device 104 performs the operations of the method by use of the network 106. Further, the transactions between the one or more nodes of the blockchain network 102 are stored in the ledger 108 via the network 106. Details for exchanging private data among nodes in the blockchain network 102 are explained in detail hereinafter.

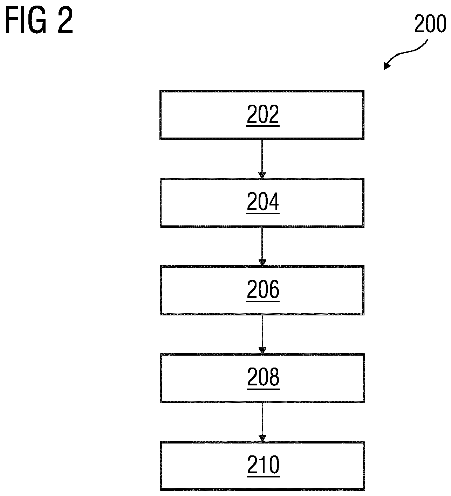

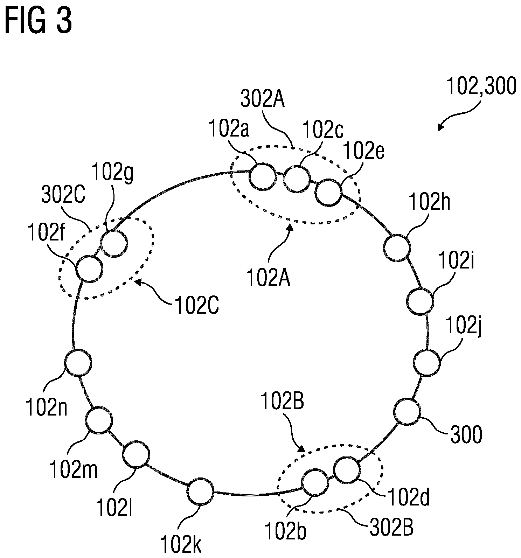

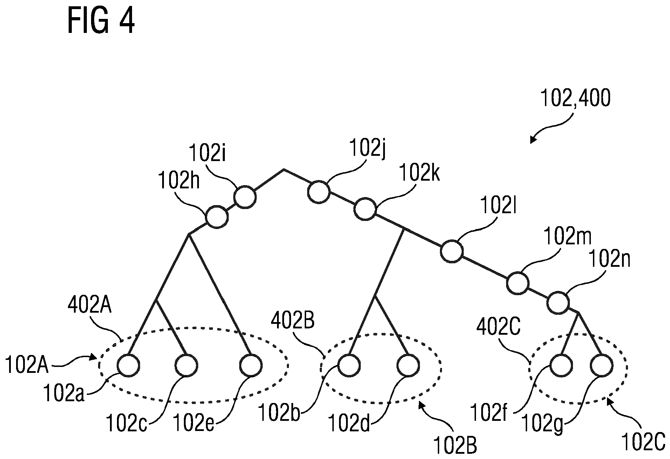

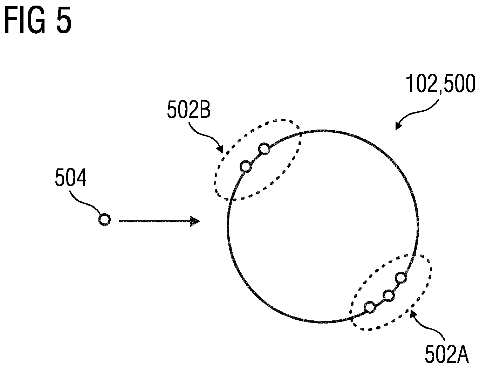

FIG 2 is a flowchart representation of a method 200 listing steps involved in exchanging private data among nodes in the blockchain network 102, in accordance with an embodiment of the present disclosure. Hereinafter, the method 200 of FIG 2 is explained in conjunction with elements of FIG 1, and further in reference to FIGS 3 to 7. Herein, FIGS 3 and 4 are schematic exemplary implementations of the blockchain network 102, in accordance with different embodiments of the present disclosure. Further, FIGS 5 to 7 are schematic diagram exemplary implementations of the blockchain network 102 for a scenario in which a given node is required to exchange private data with nodes in two groups of nodes, in accordance with different embodiments of the present disclosure.

At step 202, the method 200 includes defining one or more groups of nodes required to exchange the private data therebetween. As discussed, the blockchain network 102 includes a plurality of nodes, like the nodes 102a, 102b, ..., 102n. For instance, from the nodes 102a, 102b, ..., 102n, there may be a set of nodes, such as nodes 102a, 102c and 102e which may wish to exchange private data therebetween without transmitting the said private data through other nodes in the blockchain network 102. In the present embodiments, such nodes 102a, 102c and 102e are grouped together to define one or more groups (sets) of nodes required to exchange the private data therebetween. As shown in FIGS 3 and 4, the nodes 102a, 102c and 102e are grouped to define a first group of nodes 102A. Similarly, there may be another set of nodes 102b and 102d which may wish to exchange private data therebetween without transmitting the said private data through other nodes in the blockchain network 102; and as shown in FIGS 3 and 4, the nodes 102b and 102d are grouped to define a second group of nodes 102B. Further, there may be another set of nodes 102f and 102g which may wish to exchange private data therebetween without transmitting the said private data through other nodes in the blockchain network 102; and as shown in FIGS 3 and 4, the nodes 102f and 102g are grouped to define a third group of nodes 102C.

It may be understood that traditional computer networks are primarily classified into client-server and P2P networks. In the client-server model, the server acts as a central hub and all messages are routed via the server. In P2P networks, there is no central entity, and the network is made up of equivalent nodes connected to each other. Each node connects to one or more other nodes in a manner that all nodes are connected to each other via some path. P2P networks are usually unstructured in nature, i.e., there is no geometry or structure enforced on the network. Such a randomized structure limits the messaging protocols and gossip protocol is the most used protocol wherein a node forwards each message to all its neighbours, and this process is repeated for all nodes. It may be contemplated by a person skilled in the art that the gossip protocol is liable to send many superfluous or redundant messages. However, in spite of the higher bandwidth usage, the gossip protocol is a simple and reliable protocol for most scenarios. However, during the transmission of confidential data, the gossip protocol can result in the transmission of sensitive data to unauthorized nodes. All the existing techniques for achieving confidentiality lie on top of the networking layer and rely on cryptographic techniques. As such, they inherit the limitations of the messaging protocol.

The present disclosure proposes that achieving confidentiality at the networking layer is more efficient and effective. However, this would require targeted messaging in place of the gossip protocol, which in turn requires a structured network. Herein, the structured P2P networks enforce a specific geometrical shape on network.

At step 204, the method 200 includes implementing a structured network topology with one or more network zones for establishing connections between the nodes in the blockchain network 102, such that the nodes in each of the one or more groups of nodes are arranged in one of the one or more network zones in the implemented structured network topology. Herein, the structured network topology (P2P networks) enforces a specific geometrical shape on the blockchain network 102. It is to be noted that the structured network topologies usually derive their designs from distributed hash tables (DHTs) defined for the blockchain network 102.

In the present embodiments, the structured network topology is one of: a ring topology, a tree topology, an XOR topology, a cube topology, a hypercube topology. In the accompanied drawings, FIG 3 depicts a first structured network topology, specifically a ring topology 300 being implemented for the nodes 102a, 102b, ..., 102n of the blockchain network 102; and FIG 4 depicts a second structured network topology, specifically a tree topology 400 being implemented for the nodes 102a, 102b, ..., 102n of the blockchain network 102. It may be appreciated that given types of the structured network topologies are some of the examples, and other suitable types of structured network topologies may be implemented for the purposes of the present disclosure without any limitations.

Further, in the exemplary ring topology 300 of FIG 3, the nodes 102a, 102c and 102e being part of the first group of nodes 102A are arranged in a first network zone 302A. Similarly, the nodes 102b and 102d being part of the second group of nodes 102B are arranged in a second network zone 302B; and the nodes 102f and 102g being part of the third group of nodes 102C are arranged in a third network zone 302C. Also, in the exemplary tree topology 400 of FIG 4, the nodes 102a, 102c and 102e being part of the first group of nodes 102A are arranged in a first network zone 402A. Similarly, the nodes 102b and 102d being part of the second group of nodes 102B are arranged in a second network zone 402B; and the nodes 102f and 102g being part of the third group of nodes 102C are arranged in a third network zone 402C. It may be appreciated that the structured networks may be easily partitioned into subsets. For example, the ring topology 300 of FIG 3 may be partitioned into sectors (which can be of same or different size), and such sectors may define the corresponding network zones 302A, 302B and 302C. Further, the tree topology 400 of FIG 4 may be branched into subtrees (with the leaf nodes in the tree are the actual nodes), and such subtrees may define the corresponding network zones 402A, 402B and 402C. This approach may be implemented for other structured network topologies like the XOR topology, the cube topology, the hypercube topology, without departing from the scope and the spirit of the present disclosure. For instance, partitioning a hypercube will create a set of complete or incomplete cubes which may define the corresponding network zones.

The implementation of the structured network topology results in compactness of the blockchain network 102, which, in turn, may have a smaller "network diameter" than unstructured networks. This helps to reduce the propagation time and also the chances of packet drops, during transmission of data in the blockchain network 102. Further, this leads to uniformity, as all the nodes are required to maintain roughly the same number of network links, thereby avoiding the overloading of specific nodes. More importantly, for purposes of the present disclosure, the structured network topology enables for targeted messaging, as the messages can be routed via and targeted to specific nodes (as discussed hereinafter in more detail).

At step 206, the method 200 includes assigning a topology identification number to each of the nodes, such that the topology identification numbers of the nodes in each of the network zones are in a series. Herein, each of the nodes is assigned a topology identification number (topology ID) which determines the position of the node in the implemented structured network topology. It may be appreciated that the topology ID may be different from traditionally assigned blockchain ID for each node, which is usually derived from the node's certificate/key in the blockchain network 102. Herein, the topology ID also determines the neighbours of a node in the implemented structured network topology, and each node connects only to these neighbours in the implemented structured network topology. It may be understood that a maximum number of neighbours for each node is fixed for a given implemented structured network topology. As discussed, the topology IDs of the nodes are different from the unique block IDs that may be assigned to the nodes for identity and authorization. In the present embodiments, the topology IDs are not unique as nodes can arbitrarily join or leave the defined groups (as will be discussed later) and these actions should not disrupt the blockchain network 102.

In the exemplary ring topology 300 of FIG 3, the nodes 102a, 102c and 102e being part of the first network zone 302A may be assigned the topology IDs as 01, 02 and 03, respectively. The nodes 102b and 102d being part of the second network zone 302B may be assigned the topology IDs as 04 and 05, respectively. And the nodes 102f and 102g being part of the third network zone 302C may be assigned the topology IDs as 06 and 07, respectively. As may be seen, the topology IDs for the nodes in each of the network zones are in series and consecutive to each other. It may be appreciated that the assigned topology IDs for the nodes in each of the network zones may not be a consecutive numbers series, but may be in any other suitable series. For instance, in the exemplary tree topology 400 of FIG 4, the topology IDs may be derived from corresponding branches of the nodes in the tree topology 400, as defined by numbering the corresponding branches as '0' or '1' from each junction. Herein, the nodes 102a, 102c and 102e being part of the first network zone 402A may be assigned the topology IDs as '000', '001' and '010', respectively. The nodes 102b and 102d being part of the second network zone 402B may be assigned the topology IDs as '100' and '101', respectively. And the nodes 102f and 102g being part of the third network zone 402C may be assigned the topology IDs as '110' and '111', respectively.

These network zones (virtual partitions) may be used to create confidentiality groups, i.e., group of nodes who wish to share private data amongst themselves. The partitions would provide functional features similar to side chains and private channels of existing blockchain network. However, they differ in the manner they are achieved. Rather than protocol-level confidentiality guarantees which let confidential data pass via unauthorized nodes, the presented approach ensures that private data never leaves the purview of those who are authorized to view it. For example, in the described tree topology 400 of FIG 4, the first subtree which consists of the nodes with topology IDS being '000', '001' and '010' are located in the same logical network zone (i.e., the first network zone 402A) and can exchange private data amongst themselves without requiring any external forwarder or relay nodes.

At step 208, the method 200 includes defining a limit for each of the network zones based, at least in part, on the topology identification numbers of the nodes therein for exchange of the private data by one of the nodes in the corresponding network zone to one or more other nodes in the said corresponding network zone. Herein, the nodes in any of the network zone when required to exchange private data with other nodes in the same network zone can implement the limit which ensures that the data packets (corresponding to the private data) are only limited to be transmitted up to the nodes in the same network zone. In one example, the limit may define the number of network hops a given data packet may make before further transmission thereof is halted. It may be appreciated that since the node transmitting the given data packet may not always be central in the corresponding network zone, thus the limit may need to be defined for either network paths (directions) from the node in consideration.

According to the embodiments of the present disclosure, the implemented structured network topology for the blockchain network 102 may have to handle two different cases, (i) each node being part of only one of the defined groups; and (ii) one or more nodes being part of more than one group of the defined groups (i.e., participate in overlapping confidentiality groups).

In one or more embodiments, the topology identification numbers for the nodes in each of the network zones comprise a lowest topology identification number and a highest topology identification number, and wherein the limit for each of the network zones is defined based on the lowest topology identification number and the highest topology identification number of the nodes therein. For example, in the exemplary tree topology 400 of FIG 4, the nodes 102a, 102c and 102e as part of the first network zone 402A with the topology IDs '000', '001' and '010', respectively, may have the lowest topology identification number as '000' and the highest topology identification number as '010'. In such case, the limit, may be defined such that the data packet transmitting from any of the nodes 102a, 102c and 102e in the first network zone 402A may not transmit beyond the node with the topology identification number being '000' (i.e., the node 102a), and the node with the topology identification number being '010' (i.e., the node 102e). Such implementation may be executed for the said first case in which each node is part of only one of the defined groups.

In one or more embodiments, the topology identification numbers for the nodes in each of the network zones comprise a lowest topology identification number and a highest topology identification number, and wherein the limit for each of the network zones is defined based on the lowest topology identification number and the highest topology identification number of the nodes therein. For example, in the exemplary tree topology 400 of FIG 4, the nodes 102a, 102c and 102e as part of the first network zone 402A with the topology IDs '000', '001' and '010', respectively, may have the lowest topology identification number as '000' and the highest topology identification number as '010'. In such case, the limit may be defined such that the data packet transmitting from any of the nodes 102a, 102c and 102e in the first network zone 402A may not transmit beyond the node with the topology identification number being '000' (i.e., the node 102a), and the node with the topology identification number being '010' (i.e., the node 102e). The proposed approach works well for disjoint groups when no two groups share a common node or entity. The different groups lie on different places on the logical networking layer and separated from each other, thereby ensuring isolation at the networking level (as shown in FIGS 3 and 4). Such implementation may be executed for the said first case in which each node is part of only one of the defined groups.

For the second case in which one or more nodes are part of more than one group of the defined groups, a challenge may, however, arise when the groups overlap, i.e., the same node or nodes are part of multiple confidentiality groups. Referring to FIG 5, for example, considering a ring topology 500 (as shown) with two confidentiality groups 502A and 502B. When the nodes in the ring topology 500 enter the blockchain network, they chose to be part of one of the groups 502A and 502B and are assigned an appropriate topology ID (which placed them in proximity to other nodes in the same group) and corresponding network zones. Now, if a given node 504 enters the network and expresses interest in joining both the groups 502A and 502B, the limit may need to be defined in a manner that the data packets may be received by the given node 504 from the nodes of both the groups 502A and 502B. It may be appreciated that the proposed approach is geometry agnostic (with the geometry being chosen on the application), and is not limited to the ring topology 500 as shown in FIG 5.

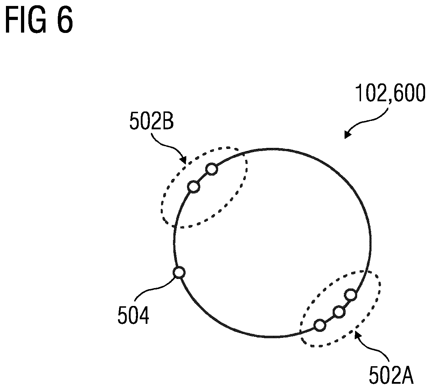

In one or more embodiments, in case of a given node (such as, the given node 504) in the blockchain network is required to exchange private data with nodes in two groups (such as, the groups 502A and 502B) of the defined one or more groups of nodes, the given node 504 is also assigned a single topology identification number as described hereinafter. In particular, the method 200 comprises assigning the topology identification number to the given node 504 succeeding the highest topology identification number for the nodes in first of the said two groups of nodes (like, the first group 502A) and preceding the lowest topology identification number for the nodes in second of the said two groups of nodes (like, the second group 502B). Further, the highest topology identification number for the nodes in first of the said two groups of nodes, the assigned topology identification number to the given node and the lowest topology identification number for the nodes in second of the said two groups of nodes are in a series. Furthermore, in such case, the limit for the network zone corresponding to the first of the said two groups of nodes (like, the first group 502A) is defined based on the lowest topology identification number of the nodes therein and the assigned topology identification number to the given node 504; and the limit for the network zone corresponding to the second of the said two groups of nodes (like, the second group 502B) is defined based on the assigned topology identification number to the given node and the highest topology identification number of the nodes therein. Referring to FIG 6, as shown in the implementation of the present case with a ring topology 600 therein, this ensures that the given node 504 is placed it in a location equidistant between the existing groups 502A and 502B; and the corresponding defined limits ensures that the nodes in the groups 502A and 502B can exchange private data with the given node 504 without transmitting the said private data to any unauthorized nodes of the ring topology 600.

However, the described approach in the preceding paragraph has certain limitation in terms of scalability and could not be implemented, for example, when the address space between the two groups might not be free and occupied by another group, or if a node wishes to join more than two groups, then its location might not be always determinable.

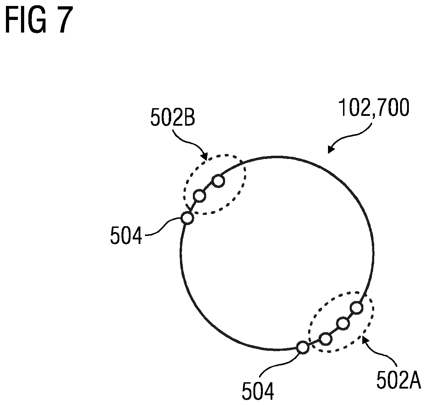

In one or more embodiments, in case of a given node (such as, the given node 504) in the blockchain network is required to exchange private data with nodes in two groups (such as, the groups 502A and 502B) of the defined one or more groups of nodes, the given node 504 is assigned two topology identification numbers as described hereinafter. In particular, the method 200 comprises assigning a first topology identification number to the given node 504 succeeding the highest topology identification number for the nodes in first of the said two groups of nodes (like, the first group 502A), and also assigning a second topology identification number to the same given node preceding the lowest topology identification number for the nodes in second of the said two groups of nodes (like, the second group 502B). Furthermore, in such case, the limit for the network zone corresponding to the first of the said two groups of nodes (like, the first group 502A) is defined based on the lowest topology identification number of the nodes therein and the assigned first topology identification number to the given node 504, and the limit for the network zone corresponding to the second of the said two groups of nodes (like, the second group 502B) is defined based on the assigned second topology identification number to the given node 504 and the highest topology identification number of the nodes therein. Referring to FIG 7, as shown in the implementation of the present case with a ring topology 700 therein, the given node 504 is placed at two locations (in terms of network topology) next to both the groups 502A and 502B. Existing blockchains already maintain two separate ledgers if a node is a member of two private channels, and the proposed approach would enforce creation of another topology ID per group. The individual groups are independent and thereby, this only tends to improve the privacy isolation across confidentiality groups. If the given node 504 wishes to leave only of the groups 502A and 502B, only the corresponding topology ID is removed. Similarly, if the given node 504 wishes to join another group, another appropriate topology ID is created. Herein, the corresponding defined limits for the network zones corresponding to the groups 502A and 502B ensures that the nodes in the groups 502A and 502B can exchange private data with the given node 504 without transmitting the said private data to any unauthorized nodes of the ring topology 700.

Further, at step 210, the method 200 includes exchanging private data between the nodes 102a, 102b, ..., 102n in the blockchain network 102 in consideration of the defined limits for the corresponding network zones thereof. In the embodiments of the present disclosure, the limit enforces confidentiality requirements at the network layer in contrast to the existing solutions which function at the application or protocol level. For example, in case of the tree topology 400 of FIG 4, the limit for the first network zone 402A ensures that the data packet transmitting from any of the nodes 102a, 102c and 102e in the first network zone 402A may not transmit beyond the node with the topology identification number being '000' (i.e., the node 102a), and the node with the topology identification number being '010' (i.e., the node 102e). Similarly, in case of the ring topologies 600 and 700, the corresponding defined limits for the network zones corresponding to the groups 502A and 502B ensure that the nodes in the groups 502A and 502B can exchange private data with the given node 504 without transmitting the said private data to any unauthorized nodes of the corresponding ring topology 600 and 700, respectively.

In one or more embodiments of the present disclosure, the entire blockchain network may work as a single global chain, with some private chains. Herein, nodes may exist as a set of participants of the blockchain network, but the connection among the nodes for data exchange is defined based on the topology IDs. So, all the nodes will be assigned one global topology ID, based on which the communication happens between them. This would be akin to any normal blockchain with nodes. But when some of the nodes would need to create a new private channel, new topology IDs will be assigned to such nodes, and based on these new topology IDs, the set of nodes can create and communicate over the private network zone, while being part of the global chain as well.

The present disclosure provides a higher level of confidentiality as sensitive data is not routed via unauthorized nodes (even in encrypted form). This improves efficiency of the blockchain network as targeted messaging has lower overheads than gossip protocol. The proposed approach is inherently scalable to large blockchain networks. It may be appreciated that the utilized blockchain network may not need to rely on any specific structured network topology and can be adapted across use cases and environments. Further, the disclosed embodiments of the present disclosure provide flexibility to the blockchain network by allowing the nodes to join and leave any group arbitrarily.

While the present disclosure has been described in detail with reference to certain embodiments, it should be appreciated that the present disclosure is not limited to those embodiments. In view of the present disclosure, many modifications and variations would present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope.

**Reference Numerals**

| | |
|---|---|
| system | 100 |
| blockchain network | 102 |
| nodes | 102a, 102b, ..., 102n |
| first group of nodes | 102A |
| second group of nodes | 102B |
| third group of nodes | 102C |
| computing device | 104 |
| network | 106 |
| distributed ledger | 108 |
| method | 200 |
| step | 202 |
| step | 204 |
| step | 206 |
| step | 208 |
| step | 210 |
| ring topology | 300 |
| first network zone | 302A |
| second network zone | 302B |
| third network zone | 302C |
| tree topology | 400 |
| first network zone | 402A |
| second network zone | 402B |
| third network zone | 402C |
| ring topology | 500 |
| groups | 502A, 502B |
| given node | 504 |
| ring topology | 600 |
| ring topology | 700 |

## Claims

1. A method (200) for exchanging private data among nodes (102a, 102b, ..., 102n) in a blockchain network (102), the method (200) comprising:
defining one or more groups of nodes required to exchange the private data therebetween;
implementing a structured network topology with one or more network zones for establishing connections between the nodes in the blockchain network (102), such that the nodes in each of the one or more groups of nodes are arranged in one of the one or more network zones in the implemented structured network topology;
assigning a topology identification number to each of the nodes, such that the topology identification numbers of the nodes in each of the network zones are in a series;
defining a limit for each of the network zones based, at least in part, on the topology identification numbers of the nodes therein for exchange of the private data by one of the nodes in the corresponding network zone to one or more other nodes in the said corresponding network zone; and
exchanging private data between the nodes in the blockchain network (102) in consideration of the defined limits for the corresponding network zones thereof.

2. The method (200) according to claim 1, wherein the topology identification numbers for the nodes in each of the network zones comprise a lowest topology identification number and a highest topology identification number, and wherein the limit for each of the network zones is defined based on the lowest topology identification number and the highest topology identification number of the nodes therein.

3. The method (200) according to claim 2, wherein in case of a given node (504) in the blockchain network (102) is required to exchange private data with nodes in two groups of the defined one or more groups of nodes, the method (200) comprises:
assigning the topology identification number to the given node (504) succeeding the highest topology identification number for the nodes in first of the said two groups of nodes (502A) and preceding the lowest topology identification number for the nodes in second of the said two groups of nodes (502B), and
the highest topology identification number for the nodes in first of the said two groups of nodes (502A), the assigned topology identification number to the given node (504) and the lowest topology identification number for the nodes in second of the said two groups of nodes (502B) are in a series.

4. The method (200) according to claim 3, wherein:
the limit for the network zone corresponding to the first of the said two groups of nodes (502A) is defined based on the lowest topology identification number of the nodes therein and the assigned topology identification number to the given node (504), and
the limit for the network zone corresponding to the second of the said two groups of nodes (502B) is defined based on the assigned topology identification number to the given node (504) and the highest topology identification number of the nodes therein.

5. The method (200) according to claim 2, wherein in case of a given node (504) in the blockchain network (102) is required to exchange private data with nodes in two groups of the defined one or more groups of nodes, the method (200) comprises:
assigning a first topology identification number to the given node (504) succeeding the highest topology identification number for the nodes in first of the said two groups of nodes (502A), and
assigning a second topology identification number to the same given node (504) preceding the lowest topology identification number for the nodes in second of the said two groups of nodes (502B).

6. The method (200) according to claim 5, wherein:
the limit for the network zone corresponding to the first of the said two groups of nodes (502A) is defined based on the lowest topology identification number of the nodes therein and the assigned first topology identification number to the given node (504), and
the limit for the network zone corresponding to the second of the said two groups of nodes (502B) is defined based on the assigned second topology identification number to the given node (504) and the highest topology identification number of the nodes therein.

7. The method (200) according to claim 1, wherein the structured network topology is one of: a ring topology, a tree topology, an XOR topology, a cube topology, a hypercube topology.

8. A system (100) for exchanging private data among nodes (102a, 102b, ..., 102n) in a blockchain network (102), the system (100) comprising:
one or more processing units; and
a memory communicatively coupled to the one or more processing units, the memory comprising a module stored in the form of machine-readable instructions executable by the one or more processing units, wherein the module is configured to perform the method (200) steps as claimed in claims 1 to 7.

9. A computer-program product, having computer-readable instructions stored therein, that when executed by a processor, cause the processor to perform method (200) steps according to any of the claims 1 to 7.

10. A computer readable medium on which program code sections of a computer program are saved, the program code sections being loadable into and/or executable in a system to make the system (100) execute the method (200) steps according to any of the claims 1 to 7 when the program code sections are executed in the system.
